# EUROPÄISCHE PATENTSCHRIFT

(11) **EP 3 788 324 B1**
(45) Veröffentlichungstag und Bekanntmachung des Hinweises auf die Patenterteilung: **10.08.2022**
(21) Anmeldenummer: 19718684.4
(22) Anmeldetag: 17.04.2019
(51) Int. Cl.: G01F 1/84

(54) **CORIOLIS-MESSAUFNEHMER UND CORIOLIS-MESSGERÄT**
CORIOLIS MEASURING SENSOR AND CORIOLIS MEASURING DEVICE
CAPTEUR DE MESURE À EFFET CORIOLIS ET APPAREIL DE MESURE À EFFET CORIOLIS

(30) Priorität: 02.05.2018 DE 102018110495
(43) Veröffentlichungstag der Anmeldung: 10.03.2021
(73) Patentinhaber: Endress + Hauser Flowtec AG, 4153 Reinach (CH)
(72) Erfinder: ZHU, Hao, 85354 Freising (DE); ANKLIN, Martin Josef, 4143 Dornach (CH); BITTO, Ennio, 4147 Aesch (CH)
(74) Vertreter: Andres, Angelika Maria
(86) Internationale Anmeldenummer: PCT/EP2019/059950
(87) Internationale Veröffentlichungsnummer: WO 2019/211097

(56) Entgegenhaltungen:
- EP-A1- 1 693 653
- EP-A1- 2 271 899
- EP-A1- 2 341 322
- EP-B1- 2 271 899
- WO-A1-2014/084835
- DE-A1-102009 012 474
- DE-A1-102016 112 600
- US-A- 5 907 104
- US-A1- 2002 183 951

## Beschreibung

Die Erfindung betrifft einen Coriolis-Messaufnehmer und ein Coriolis-Messgerät mit einer in einen Sensor oder in einen Erreger integrierten Temperaturmessvorrichtung.

Coriolis-Messgeräte nutzen die Tatsache aus, dass eine einem Messrohr aufgeprägte Schwingung abhängig von einem Durchfluss eines Mediums durch das Messrohr auf eine charakteristische Art und Weise gegenüber einer Schwingung ohne Durchfluss verzerrt wird. Das Aufprägen und Erfassen dieser Schwingungen wird mittels Erreger bzw. Sensoren bewerkstelligt. Üblicherweise wird das Messrohr dabei in einer Schwingungsgrundmode zum Schwingen angeregt, wobei der Durchfluss eine Auslenkung in einer höheren Schwingungsmode verursacht.

Coriolis-Messgeräte existieren in verschiedenen Ausführungen, so zeigen die folgenden Schriften Coriolis-Messgeräte mit zwei baugleichen Messrohren, wobei die EP2271899B1 ein Coriolis-Messgerät mit zwei geraden Messrohren und die DE102016112600A1 ein Coriolis-Messgerät mit zwei gebogenen Messrohren offenbart. Die WO 2014/084835 A1 offenbart ein Coriolis-Messgerät mit gebogenen Messrohren, wobei eine Sensorgruppe eine erweiterte Sensorgruppe ist.

Bei Hochdruckanwendungen ist es notwendig, dass medienführende Rohre eine ausreichende Festigkeit aufweisen, was mittels entsprechender Wandstärken der Rohre sichergestellt werden kann. Dies hat bei Coriolis-Messgeräten jedoch den Nachteil, dass die Schwingungsamplituden von auf das Messrohr aufgeprägten Schwingungen jedoch vermindert wird und somit ein Signal/Rauschen-Verhältnis verschlechtert.

Als Aufgabe der Erfindung kann es daher angesehen werden, einen Coriolis-Messaufnehmer sowie ein Coriolis-Messgerät vorzuschlagen, welche für Hochdruckanwendungen geeignet sind.

Die Aufgabe wird gelöst durch einen Coriolis-Messaufnehmer gemäß dem unabhängigen Anspruch 1 sowie durch ein Coriolis-Messgerät gemäß dem Anspruch 12.

Ein erfindungsgemäßer Coriolis-Messaufnehmer eines Coriolis-Messgeräts zum Erfassen eines Massedurchflusses oder einer Dichte eines durch mindestens ein Messrohr des Coriolis-Messgeräts strömenden Mediums umfasst:
das mindestens eine Messrohr mit einem Einlauf und einem Auslauf, welches Messrohr dazu eingerichtet ist, das Medium zwischen Einlauf und Auslauf zu führen;
mindestens eine Erregeranordnung, welcher dazu eingerichtet ist, das mindestens eine Messrohr in einer f1-Mode zu Schwingungen anzuregen;
mindestens zwei Sensorgruppen von Sensoranordnungen mit jeweils mindestens einer Sensoranordnung, wobei die Sensoranordnungen jeweils dazu eingerichtet sind, die Auslenkung der Schwingungen des mindestens eines Messrohrs zu erfassen;
wobei das mindestens eine Messrohr zumindest abschnittsweise bogenförmig ausgestaltet ist und jeweils eine Messrohrlängsebene sowie einen Messrohrpfad entlang einer Messrohrmittenlinie definiert,
wobei die Erregeranordnung dazu eingerichtet ist, Schwingungen senkrecht zur der jeweiligen Messrohrlängsebene anzuregen,
wobei das Messrohr im Bereich des Einlaufs und des Auslaufs durch jeweils eine Fixiervorrichtung dergestalt eingespannt ist, dass Messrohrschwingungen im Bereich des Einlaufs und Auslaufs jeweils einen äußeren Schwingungsknoten aufweisen, welche äußeren Schwingungsknoten auf der Messrohrmittenlinie jeweils einen Knotenpunkt definieren, wobei die Knotenpunkte eine Längsachse definieren,
wobei das Messrohr eine der Längsachse zugewandte Innenseite sowie eine der Längsachse abgewandte Außenseite aufweist,
wobei die Erregeranordnung bezüglich des Einlaufs und des Auslaufs in einem Mittenbereich des Messrohrs angeordnet ist, wobei eine erste Sensorgruppe in einem einlaufseitigen Zwischenbereich des Messrohrs angeordnet ist, und wobei eine zweite Sensorgruppe in einem auslaufseitigen Zwischenbereich des Messrohrs angeordnet ist,
wobei
   mindestens eine Sensorgruppe eine erweiterte Sensorgruppe ist und mindestens zwei Sensoranordnungen umfasst,
wobei jede Sensoranordnung der erweiterten Sensorgruppe auf einer Außenseite oder auf einer Innenseite des Messrohrs angeordnet ist,
wobei eine Sensoranordnung auf der Außenseite eine äußere Sensoranordnung ist, und wobei eine Sensoranordnung auf der Innenseite eine innere Sensoranordnung ist.

Die f1-Mode ist dabei die Schwingungsgrundmode, welche spiegelsymmetrisch ist bezüglich einer das Messrohr mittig schneidenden Messrohrquerschnittsebene. Das Einrichten zumindest einer erweiterten Sensorgruppe mit mindestens zwei Sensoranordnungen ermöglicht ein besseres Signal/Rauschen-Verhältnis der Durchfluss- bzw. Dichtmessung.

In einer Ausgestaltung sind die Sensoranordnungen der erweiterten Sensorgruppe entweder auf der Außenseite oder auf der Innenseite angeordnet, wobei eine erste Sensoranordnung in einem ersten Querschnitt der Messrohrmittenlinie angeordnet ist, und wobei eine zweite Sensoranordnung in einem zweiten Querschnitt der Messrohrmittenlinie angeordnet ist, wobei die erste Sensoranordnung bezüglich der zweiten Sensoranordnung in Richtung der Erregeranordnung entlang der Messrohrmittenlinie um eine erste Versatzlänge versetzt ist.

Durch den Versatz der Sensoranordnungen entlang der Messrohrmittenlinie kann vermieden werden, dass die einzelnen Sensoranordnungen bzw. elektrische Verbindungen der Sensoranordnungen mit einer elektronischen Mess-/Betriebsschaltung sich beispielsweise mechanisch beeinflussen.

In einer Ausgestaltung ist das Messrohr dazu eingerichtet, bei Durchfluss eines Mediums eine f2-Mode auszubilden, wobei die f2-Mode einen inneren Schwingungsknoten (ISK) sowie zwischen innerem Schwingungsknoten und jeweils einem äußeren Schwingungsknoten ein f2-Amplitudenmaximum aufweist,
wobei die zweite Sensoranordnung in einem Bereich des f2-Amplitudenmaximums angeordnet ist, und wobei die erste Sensoranordnung in einem Bereich eines maximalen Verhältnisses f2-Amplitude zu f1-Amplitude angeordnet ist.

Im Bereich des f2-Amplitudenmaximums lässt sich ein gutes Signal/Rauschen-Verhältnis finden, und im Bereich maximalen Verhältnisses f2-Amplitude zu f1-Amplitude liegt eine maximale Zeitverschiebung zwischen einer einlaufseitigen ersten Sensoranordnung und einer auslaufseitigen ersten Sensoranordnung.

Erfindungsgemäß ist die erste Sensoranordnung auf der Außenseite angeordnet ist und eine zweite Sensoranordnung auf der Innenseite angeordnet.

Eine Addition des Sensorsignals der inneren Sensoranordnung mit einem Sensorsignal der äußeren Sensoranordnung führt zu einer zumindest teilweisen Auslöschung eines Einflusses einer Messrohrtorsion auf das Sensorsignal. Dadurch lässt sich eine verbesserte Bestimmung eines Massedurchfluss- bzw. Dichtemesswerts erhalten.

Erfindungsgemäß ist die innere Sensoranordnung bezüglich der äußeren Sensoranordnung in Richtung der Erregeranordnung entlang der Messrohrmittenlinie um eine zweite Versatzlänge (VL2) versetzt ist,
wobei die innere Sensoranordnung eine Torsionsamplitude des Messrohrs erfährt, welche weniger als 20% und insbesondere weniger als 10% von der Torsionsamplitude des Messrohrs bei der äußeren Sensoranordnung abweicht.

Somit lässt sich der Einfluss der Messrohrtorsion auf die Massedurchfluss- bzw. Dichtemessung weiter verringern.

In einer Ausgestaltung weist der Messaufnehmer eine geradzahlige Anzahl von Messrohren auf, wobei jeweils zwei Messrohre ein Messrohrpaar bilden, wobei die Messrohre eines Messrohrpaars dazu eingerichtet sind, entgegengesetzt zu schwingen,
wobei die Messrohre eines Messrohrpaars bezüglich einer zwischen den entsprechenden Messrohrlängsebenen angeordneten Spiegelebene spiegelbildlich ausgebildet sind.

In einer Ausgestaltung ist die Fixiervorrichtung dazu eingerichtet, die Messrohre zumindest eines Messrohrpaars miteinander zu koppeln,
wobei die Fixiervorrichtung eine erste Einspannvorrichtung zur Festlegung des Schwingungsknoten im Bereich des Einlaufs bzw. Auslaufs aufweist, und wobei die Fixiervorrichtung auf einer der Erregeranordnung abgewandten Seite der ersten Einspannvorrichtung zumindest eine zweite Einspannvorrichtung zur Unterdrückung einer Messrohrschwingung auf der der Erregeranordnung abgewandten Seite der ersten Einspannvorrichtung aufweist.

In einer Ausgestaltung ist die erste Einspannvorrichtung und/oder die zweite Einspannvorrichtung plattenförmig und umgreift die Messrohre eines Messrohrpaars jeweils zumindest teilweise.

In einer Ausgestaltung ist der Messaufnehmer für Hochdruckanwendungen eingerichtet,
wobei ein Verhältnis Außendurchmesser des Messrohrs zu Wandstärke höchstens 20 und insbesondere höchstens 17 und bevorzugt höchstens 15 ist, und/oder wobei
ein Mindestdruck 40 Bar und insbesondere 70 Bar und bevorzugt 100 Bar ist.

In einer Ausgestaltung weist der Messaufnehmer zwei Sammler auf, wobei ein erster Sammler auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler dazu eingerichtet ist, das aus dem Auslauf des mindestens einen Messrohrs austretende Medium aufzunehmen und in die Rohrleitung zu führen.

In einer Ausgestaltung weist der Messaufnehmer zwei Prozessanschlüsse, insbesondere Flansche auf, welche dazu eingerichtet sind, den Messaufnehmer mit einer Rohrleitung zu verbinden.

In einer Ausgestaltung weist der Messaufnehmer ein Trägerrohr mit einer Trägerrohrkammer auf, welche Trägerrohrkammer dazu eingerichtet ist, das mindestens eine Messrohr zumindest abschnittsweise zu behausen.

In einer Ausgestaltung weist die Erregeranordnung zumindest ein bewegliches Erregerelement und zumindest ein feststehendes Erregerelement auf, wobei das bewegliche Erregerelement an einem Messrohr angeordnet ist, und/oder
wobei die Sensoranordnung zumindest ein bewegliches Sensorelement und zumindest ein feststehendes Sensorelement aufweist, wobei das bewegliche Sensorelement an einem Messrohr angeordnet ist und dazu eingerichtet ist, den Bewegungen des Messrohrs zu folgen,
wobei das feststehende Erreger- bzw. Sensorelement insbesondere eine Spulenvorrichtung ist, und wobei das bewegliche Erreger- bzw. Sensorelement insbesondere ein Permanentmagnet ist.

Ein erfindungsgemäßes Coriolis-Messgerät umfasst einen Coriolis-Messaufnehmer nach einem der vorigen Ansprüche;
eine elektronische Mess-/Betriebsschaltung, wobei die elektronische Mess-/Betriebsschaltung dazu eingerichtet ist, die Erregeranordnung sowie die Sensoranordnungen zu betreiben,
wobei die elektronische Mess-/Betriebsschaltung weiter dazu eingerichtet ist, auf Basis von mittels der Sensoranordnungen gemessenen Schwingungseigenschaften des Messrohrs Durchflussmesswerte und/oder Dichtemesswerte zu ermitteln und bereitzustellen,
wobei die elektronische Mess-/Betriebsschaltung mittels elektrischer Verbindungen mit den Sensoranordnungen sowie mit der Erregeranordnung verbunden ist,
wobei das Messgerät insbesondere ein Elektronikgehäuse zum Behausen der elektronischen Mess-/Betriebsschaltung aufweist.

Im Folgenden wird die Erfindung anhand von Ausführungsbeispielen beschrieben.

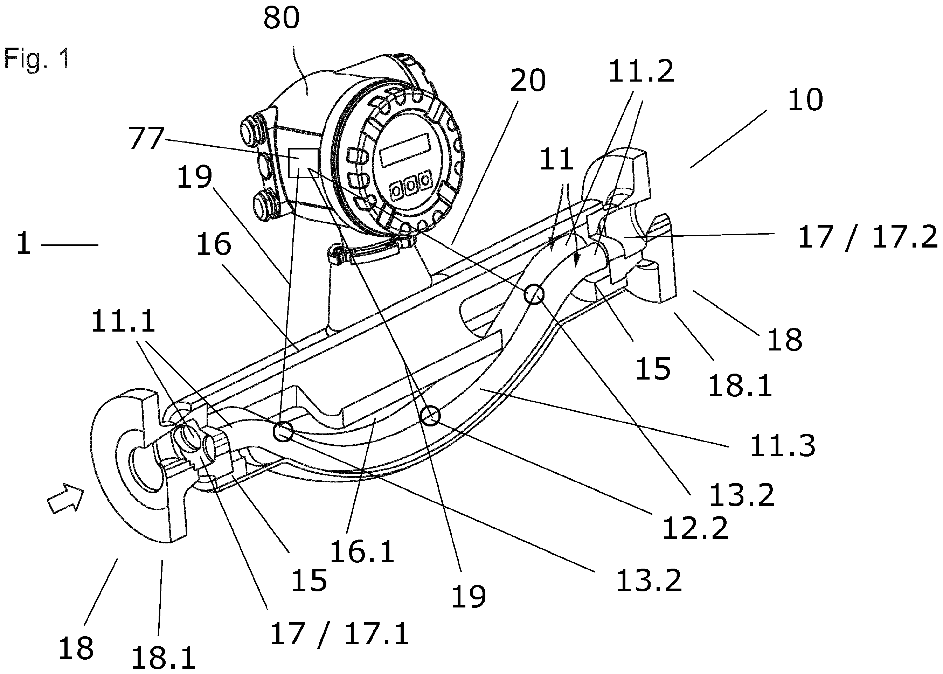

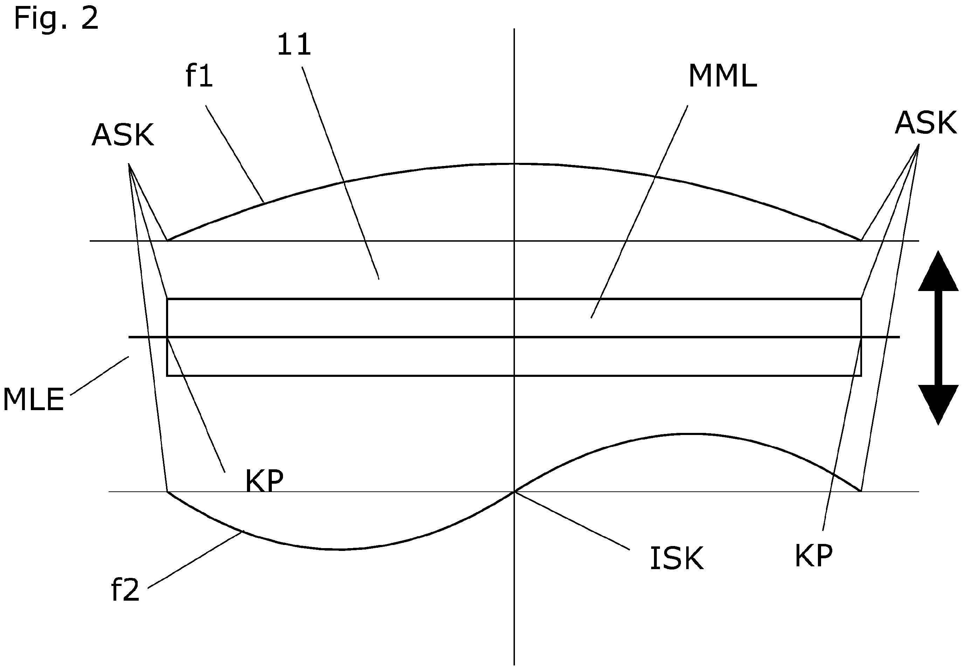

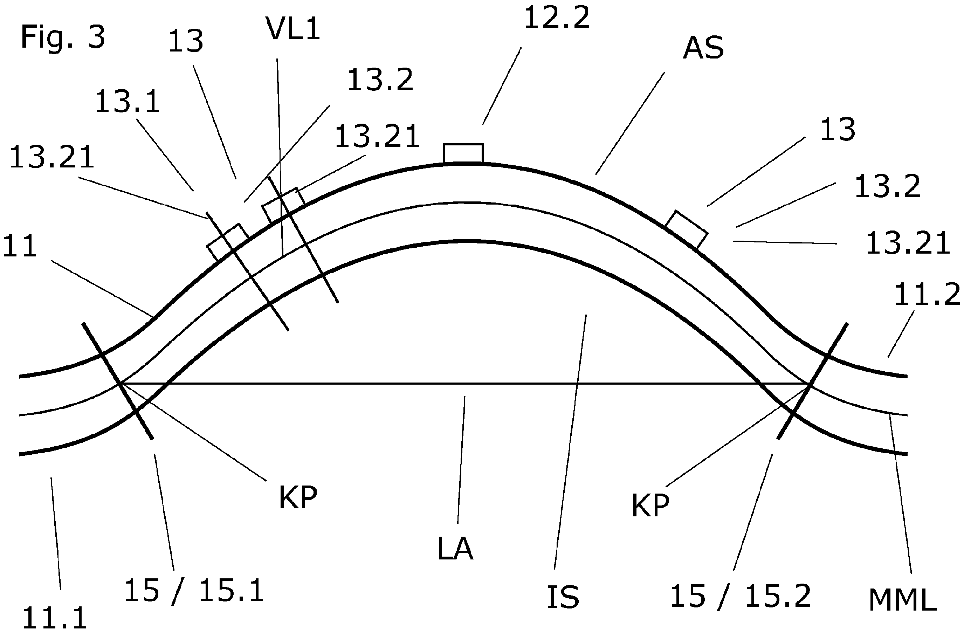

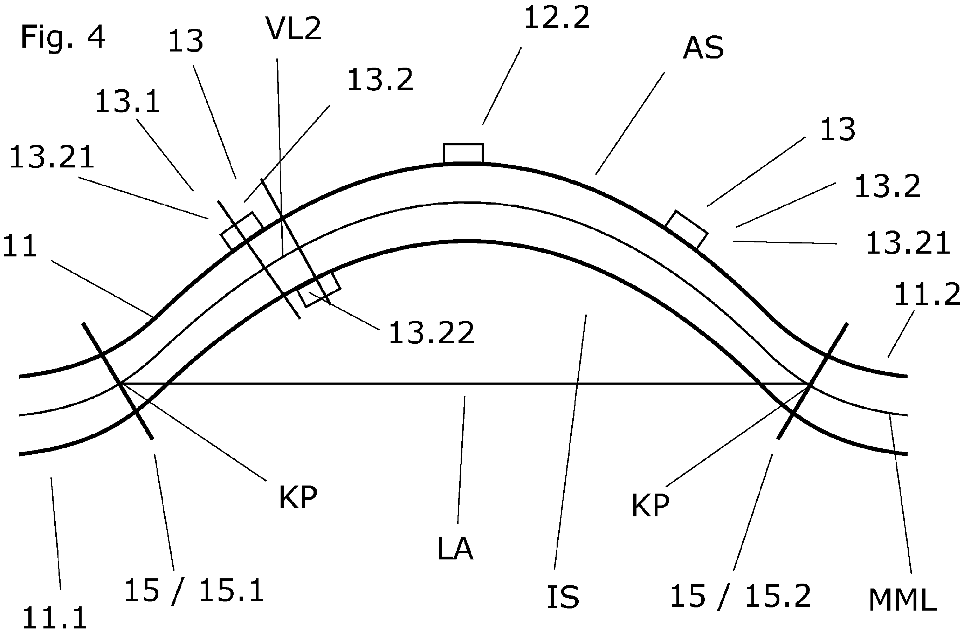

Fig. 1 skizziert den Aufbau eines typischen Coriolis-Messgeräts; und Fig. 2 skizziert den schematischen Verlauf von Messrohrschwingungsmoden sowie die Lage charakteristischer Punkte, Linien und Ebenen; und Fig. 3 skizziert ein schematisches Messrohr mit einer beispielhaften erfindungsgemäßen Sensoranordnung, und Fig. 4 skizziert ein schematisches Messrohr mit einer beispielhaften erfindungsgemäßen Sensoranordnung.

Fig. 1 skizziert den Aufbau eines Coriolis-Messgeräts 1 mit einem Coriolis-Messaufnehmer 10, wobei der Messaufnehmer zwei Messrohre 11 mit jeweils einem Einlauf 11.1 und einem Auslauf 11.2, eine Erregeranordnung 12.2, zwei Sensoranordnungen 13.2, zwei Sammler 17 und zwei Prozessanschlüsse 18 aufweist. Die Erregeranordnung ist dazu eingerichtet, die beiden Messrohre senkrecht zu einer jeweils durch die bogenförmig ausgestalteten Messrohre definierten Messrohrlängsebene zum Schwingen anzuregen. Die Sensoranordnungen sind dazu eingerichtet, die den Messrohren aufgeprägte Schwingung zu erfassen. Ein erster Sammler 17.1 auf einer stromaufwärtsgerichteten Seite des Messaufnehmers ist dazu eingerichtet, ein aus einer Rohrleitung in den Messaufnehmer einströmendes Medium aufzunehmen und zu den Einläufen der beiden Messrohre zu führen, ein zweiter Sammler 17.2 ist dazu eingerichtet, das aus den Ausläufen der beiden Messrohre austretende Medium aufzunehmen und in die Rohrleitung zu führen. Die Sammler ihrerseits münden jeweils in einen Prozessanschluss 18, welcher wie hier gezeigt Flansche 18.1 sein können. Die Prozessaufnehmer sind dazu eingerichtet, den Coriolis-Messaufnehmer bzw. das Coriolis-Messgerät mit einer Rohrleitung zu verbinden.

Der Coriolis-Messaufnehmer ist mit einem Elektronikgehäuse 80 des Coriolis-Messgeräts verbunden, welches dazu eingerichtet ist, eine elektronische Mess-/Betriebsschaltung 77 zu behausen, welche Mess-/Betriebsschaltung dazu eingerichtet ist, die Erregeranordnung sowie die Sensoranordnungen zu betrieben und auf Basis von mittels der Sensoranordnungen gemessenen Schwingungseigenschaften des Messrohrs Durchflussmesswerte und/oder Dichtemesswerte zu ermitteln und bereitzustellen. Die Erregeranordnung sowie die Sensoranordnungen sind mittels elektrischer Verbindungen 19 mit der elektronischen Mess-/Betriebsschaltung verbunden. Die elektrischen Verbindungen 19 können jeweils durch Kabelführungen zusammengefasst sein.

Der Coriolis-Messaufnehmer weist ferner eine Fixiervorrichtung 15 auf, welche dazu eingerichtet ist, äußere Schwingungsknoten von Messrohrschwingungen zu definieren.

Ein erfindungsgemäßes Coriolis-Messgerät ist nicht auf das Vorhandensein zweier Messrohre beschränkt. So sind auch Einrohr- oder Mehrrohrsysteme mit mehr als zwei Rohren denkbar.

Fig. 2 zeigt eine skizzenhafte Aufsicht auf ein Messrohr 11 entlang einer zugehörigen Messrohrlängsebene MLE. Schwingungen, welche durch eine Erregeranordnung auf das Messrohr aufgeprägt werden, weisen Schwingungsamplituden senkrecht zur Messrohrlängsebene auf, wie durch den Doppelpfeil angedeutet. Eine f1-Mode ist spiegelsymmetrisch bezüglich einer das Messrohr mittig schneidenden Messrohrquerschnittsebene, eine f2-Mode ist dabei eine Schwingungsmode zweiter Ordnung, wobei eine Amplitudenverteilung entlang der Messrohrmittenlinie punktsymmetrisch bezüglich eines Schnittpunkts der Messrohrquerschnittsebene mit der Messrohrmittenlinie ist.

Die f1-Mode weist dabei eine Amplitudenverteilung mit einem Maximum auf, welches Maximum mittig zwischen den äußeren Schwingungsknoten ASK liegt. Die f2-Mode weist mittig zwischen den äußeren Schwingungsknoten einen inneren Schwingungsknoten ISK auf, wobei zwischen dem inneren Schwingungsknoten und jeweils einem äußeren Schwingungsknoten ein Extremum der Amplitudenverteilung vorzufinden ist.

Fig. 3 skizziert ein schematisches Messrohr 11 mit einer von der Ansprüche nicht beanspruchten Sensorgruppe 13. Das Messrohr ist mittels einer Fixiervorrichtung 15 eingespannt ist, so dass auf einer Messrohrmittenlinie MML Knotenpunkte KP definiert sind, bei welchen Messrohrschwingungen jeweils einen äußeren Knotenpunkt aufweisen. Die Fixiervorrichtung weist einlaufseitig eine erste Einspannvorrichtung 15.1 und auslaufseitig eine zweite Einspannvorrichtung 15.2 auf, welche beispielsweise plattenförmig ausgebildet sein können.

Die Knotenpunkte KP definieren eine Längsachse LA, bezüglich welcher das Messrohr zwischen den Knotenpunkten eine Innenseite IS sowie eine Außenseite AS aufweist. Die Erregeranordnung 12.2 ist dabei mittig auf der Außenseite des Messrohrs angeordnet, kann aber auch auf der Innenseite des Messrohrs angeordnet sein. Zwischen der Erregeranordnung und jeweils einer Einspannvorrichtung 15.1, 15.2 ist jeweils eine Sensorgruppe 13 mit mindestens einer Sensoranordnung 13.2 angeordnet. Erfindungsgemäß ist zumindest eine Sensorgruppe eine erweiterte Sensorgruppe 13.1 mit mindestens zwei Sensoranordnungen 13.2, wobei zwei äußere Sensoranordnungen 13.21 auf der Außenseite des Messrohrs angeordnet sind, welche um eine Versatzlänge VL1 entlang der Messrohrmittenlinie MML versetzt sind. Alternativ können die Sensoranordnungen auch innere Sensoranordnungen sein. Beispielsweiset ist die zweite Sensoranordnung in einem Bereich des f2-Amplitudenmaximums angeordnet, und die erste Sensoranordnung in einem Bereich eines maximalen Verhältnisses f2-Amplitude zu f1-Amplitude angeordnet.

Fig. 4 skizziert ein schematisches Messrohr 11 mit einer beispielhaften erfindungsgemäßen Sensorgruppe 13. Anders als in Fig. 3 gezeigt, weist eine erfindungsgemäße erweiterte Sensorgruppe eine innere Sensoranordnung und eine äußere Sensoranordnung auf, welche bevorzugt um eine Versatzlänge VL2 entlang der Messrohrmittenlinie MML versetzt sind. Durch Einrichten einer äußeren Sensoranordnung und einer inneren Sensoranordnung kann eine Messrohrtorsion zumindest teilweise kompensiert werden. Bei Einrichten der Versatzlänge VL2 kann sichergestellt werden, dass die Torsionsamplituden der Sensoranordnungen weniger als 20% voneinander abweichen. Die zweite Versatzlänge kann beispielsweise einen Wert von 0.5 bis 2 Messrohrdurchmessern aufweisen.

### Bezugszeichenliste

- 1: Coriolis-Messgerät
- 10: Coriolis-Messaufnehmer
- 11: Messrohr
- 11.1: Einlauf
- 11.2: Auslauf
- 11.3: Krümmung
- 12.2: Erregeranordnung
- 13: Sensorgruppe
- 13.1: erweiterte Sensorgruppe
- 13.2: Sensoranordnung
- 13.21: Äußere Sensoranordnung
- 13.22: Innere Sensoranordnung
- 15: Fixiervorrichtung
- 15.1: Einspannvorrichtung
- 16: Trägerrohr
- 16.1: Trägerrohrkammer
- 17: Sammler
- 17.1: erster Sammler
- 17.2: zweiter Sammler
- 18: Prozessanschluss
- 18.1: Flansch
- 19: elektrische Verbindungen
- 20: Kabelführung
- 77: elektronische Mess-/Betriebsschaltung
- 80: Elektronikgehäuse
- MML: Messrohrmittenlinie
- MLE: Messrohrlängsebene
- ASK: Äußerer Schwingungsknoten
- ISK: Innerer Schwingungsknoten
- LA: Längsachse
- Q1: erster Querschnitt
- Q2: zweiter Querschnitt
- VL1: erste Versatzlänge
- VL2: zweite Versatzlänge

## Patentansprüche

1. Coriolis-Messaufnehmer (10) eines Coriolis-Messgeräts (1) zum Erfassen eines Massedurchflusses oder einer Dichte eines durch mindestens ein Messrohr (11) des Coriolis-Messgeräts strömenden Mediums, umfassend:
das mindestens eine Messrohr mit einem Einlauf (11.1) und einem Auslauf (11.2), welches Messrohr dazu eingerichtet ist, das Medium zwischen Einlauf und Auslauf zu führen;
mindestens eine Erregeranordnung (12.1), welcher dazu eingerichtet ist, das mindestens eine Messrohr in einer f1-Mode als Schwingungsgrundmode zu Schwingungen anzuregen;
mindestens zwei Sensorgruppen von Sensoranordnungen mit jeweils mindestens einer Sensoranordnung, wobei die Sensoranordnungen jeweils dazu eingerichtet sind, die Auslenkung der Schwingungen des mindestens eines Messrohrs zu erfassen;
wobei das mindestens eine Messrohr zumindest abschnittsweise bogenförmig ausgestaltet ist und jeweils eine Messrohrlängsebene (MLE) sowie einen Messrohrpfad entlang einer Messrohrmittenlinie (MML) definiert,
wobei die Erregeranordnung dazu eingerichtet ist, Schwingungen senkrecht zur der jeweiligen Messrohrlängsebene anzuregen,
wobei das Messrohr im Bereich des Einlaufs und des Auslaufs durch eine Fixiervorrichtung dergestalt eingespannt ist, dass Messrohrschwingungen im Bereich des Einlaufs und Auslaufs jeweils einen äußeren Schwingungsknoten (ASK) aufweisen, welche äußeren Schwingungsknoten auf der Messrohrmittenlinie jeweils einen Knotenpunkt (KP) definieren,
wobei die Knotenpunkte eine Längsachse (LA) definieren,
wobei das Messrohr eine der Längsachse zugewandte Innenseite (IS) sowie eine der Längsachse abgewandte Außenseite (AS) aufweist,
wobei die Erregeranordnung bezüglich des Einlaufs und des Auslaufs in einem Mittenbereich des Messrohrs angeordnet ist, wobei eine erste Sensorgruppe in einem einlaufseitigen Zwischenbereich des Messrohrs angeordnet ist, und wobei eine zweite Sensorgruppe in einem auslaufseitigen Zwischenbereich des Messrohrs angeordnet ist,
wobei
mindestens eine Sensorgruppe (13) eine erweiterte Sensorgruppe (13.1) ist und mindestens zwei Sensoranordnungen (13.2) umfasst,
wobei jede Sensoranordnung der erweiterten Sensorgruppe auf einer Außenseite oder auf einer Innenseite des Messrohrs angeordnet ist,
wobei eine Sensoranordnung auf der Außenseite eine äußere Sensoranordnung (13.21) ist, und
wobei eine Sensoranordnung auf der Innenseite eine innere Sensoranordnung (13.22) ist,
**dadurch gekennzeichnet, dass**
eine erste Sensoranordnung auf der Außenseite angeordnet ist und eine zweite Sensoranordnung auf der Innenseite angeordnet ist,
wobei die innere Sensoranordnung bezüglich der äußeren Sensoranordnung in Richtung der Erregeranordnung entlang der Messrohrmittenlinie um eine zweite Versatzlänge (VL2) versetzt ist,
wobei die innere Sensoranordnung eine Torsionsamplitude des Messrohrs erfährt, welche weniger als 20% und insbesondere weniger als 10% von der Torsionsamplitude des Messrohrs bei der äußeren Sensoranordnung abweicht.

2. Coriolis-Messaufnehmer nach Anspruch 1,
wobei der Messaufnehmer eine geradzahlige Anzahl von Messrohren aufweist, wobei jeweils zwei Messrohre ein Messrohrpaar bilden, wobei die Messrohre eines Messrohrpaars dazu eingerichtet sind, entgegengesetzt zu schwingen,
wobei die Messrohre eines Messrohrpaars bezüglich einer zwischen den entsprechenden Messrohrlängsebenen angeordneten Spiegelebene spiegelbildlich ausgebildet sind.

3. Coriolis-Messaufnehmer nach Anspruch 2,
wobei die Fixiervorrichtung (15) dazu eingerichtet ist, die Messrohre zumindest eines Messrohrpaars miteinander zu koppeln,
wobei die Fixiervorrichtung eine erste Einspannvorrichtung (15.1) zur Festlegung des Schwingungsknoten im Bereich des Einlaufs bzw. Auslaufs aufweist, und wobei die Fixiervorrichtung auf einer der Erregeranordnung abgewandten Seite der ersten Einspannvorrichtung zumindest eine zweite Einspannvorrichtung zur Unterdrückung einer Messrohrschwingung auf der der Erregeranordnung abgewandten Seite der ersten Einspannvorrichtung aufweist.

4. Coriolis-Messaufnehmer nach Anspruch 3,
wobei die erste Einspannvorrichtung und/oder die zweite Einspannvorrichtung plattenförmig ist und die Messrohre eines Messrohrpaars jeweils zumindest teilweise umgreift.

5. Coriolis-Messaufnehmer nach einem der vorigen Ansprüche,
wobei der Messaufnehmer für Hochdruckanwendungen eingerichtet ist,
wobei ein Verhältnis Außendurchmesser des Messrohrs zu Wandstärke höchstens 20 und insbesondere höchstens 17 und bevorzugt höchstens 15 ist, und/oder wobei ein Mindestdruck 40 Bar und insbesondere 70 Bar und bevorzugt 100 Bar ist.

6. Coriolis-Messaufnehmer nach einem der vorigen Ansprüche,
wobei der Messaufnehmer zwei Sammler (17) aufweist, wobei ein erster Sammler (17.1) auf einer stromaufwärtsgerichteten Seite des Messaufnehmers dazu eingerichtet ist, ein aus einer Rohrleitung in den Messaufnehmer einströmendes Medium aufzunehmen und zum Einlauf des mindestens einen Messrohrs zu führen,
wobei ein zweiter Sammler (17.2) dazu eingerichtet ist, das aus dem Auslauf des mindestens einen Messrohrs austretende Medium aufzunehmen und in die Rohrleitung zu führen.

7. Coriolis-Messaufnehmer nach einem der vorigen Ansprüche,
wobei der Messaufnehmer zwei Prozessanschlüsse (18), insbesondere Flansche (18.1) aufweist, welche dazu eingerichtet sind, den Messaufnehmer mit einer Rohrleitung zu verbinden.

8. Coriolis-Messaufnehmer nach einem der vorigen Ansprüche,
wobei der Messaufnehmer ein Trägerrohr (16) mit einer Trägerrohrkammer (16.1) aufweist, welche Trägerrohrkammer dazu eingerichtet ist, das mindestens eine Messrohr zumindest abschnittsweise zu behausen.

9. Coriolis-Messaufnehmer nach einem der vorigen Ansprüche,
wobei die Erregeranordnung zumindest ein bewegliches Erregerelement und zumindest ein feststehendes Erregerelement aufweist, wobei das bewegliche Erregerelement an einem Messrohr angeordnet ist, und/oder
wobei die Sensoranordnung zumindest ein bewegliches Sensorelement und zumindest ein feststehendes Sensorelement aufweist, wobei das bewegliche Sensorelement an einem Messrohr angeordnet ist und dazu eingerichtet ist, den Bewegungen des Messrohrs zu folgen,
wobei das feststehende Erreger- bzw. Sensorelement insbesondere eine Spulenvorrichtung ist, und wobei das bewegliche Erreger- bzw. Sensorelement insbesondere ein Permanentmagnet ist.

10. Coriolis-Messgerät (1) umfassend:
Einen Coriolis-Messaufnehmer (10) nach Anspruch 1;
eine elektronische Mess-/Betriebsschaltung (77), wobei die elektronische Mess-/Betriebsschaltung dazu eingerichtet ist, die Erregeranordnung (12.2) sowie die Sensoranordnungen (13.2) zu betreiben,
wobei die elektronische Mess-/Betriebsschaltung weiter dazu eingerichtet ist, auf Basis von mittels der Sensoranordnungen gemessenen Schwingungseigenschaften des Messrohrs Durchflussmesswerte und/oder Dichtemesswerte zu ermitteln und bereitzustellen,
wobei die elektronische Mess-/Betriebsschaltung mittels elektrischer Verbindungen (19) mit den Sensoranordnungen sowie mit der Erregeranordnung verbunden ist,
wobei das Messgerät insbesondere ein Elektronikgehäuse (80) zum Behausen der elektronischen Mess-/Betriebsschaltung aufweist.

## Claims

1. Coriolis sensor (10) of a Coriolis measuring device (1) designed to measure a mass flow or a density of a medium flowing through at least one measuring tube (11) of the Coriolis measuring device, comprising:
the at least one measuring tube with an inlet (11.1) and an outlet (11.2), wherein said measuring tube is designed to conduct the medium between the inlet and the outlet;
at least an exciter arrangement (12.1), which is designed to make the at least one measuring tube vibrate in an f1 mode as the basic vibration mode;
at least two sensor groups of sensor arrangements each with at least one sensor arrangement, wherein the sensor arrangements are each designed to measure the deflection of the vibrations of the at least one measuring tube;
wherein the at least one measuring tube is designed at least in sections in the form of an arc and respectively defines a measuring tube longitudinal plane (MLE) and a measuring tube path along a measuring tube center line (MML),
wherein the exciter arrangement is designed to excite the measuring tube to produce vibrations perpendicular to the measuring tube longitudinal plane,
wherein the measuring tube is clamped in the area of the inlet and the outlet by a fixation device in such a way that measuring tube vibrations each have an outer vibration node (ASK) in the area of the inlet and the outlet, wherein said outer vibration nodes each define a nodal point (KP) on the measuring tube center line,
wherein the nodal points define a longitudinal axis (LA),
wherein the measuring tube has an inner side (IS) facing towards the longitudinal axis and an outer side (AS) facing away from the longitudinal axis,
wherein the exciter arrangement is arranged in a central area of the measuring tube in relation to the inlet and the outlet, wherein a first sensor group is arranged in an intermediate area of the measuring tube on the inlet side and a second sensor group is arranged in an intermediate area of the measuring tube on the outlet side,
wherein at least one sensor group (13) is an extended sensor group (13.1) and comprises at least two sensor arrangements (13.2),
wherein each sensor arrangement of the extended sensor group is arranged on an outer side or on an inner side of the measuring tube,
wherein a sensor arrangement on the outer side is an outer sensor arrangement (13.21) and
wherein a sensor arrangement on the inner side is an inner sensor arrangement (13.22),
**characterized in that** a first sensor arrangement is arranged on the outer side and a second sensor arrangement is arranged on the inner side,
wherein the inner sensor arrangement is offset by a second offset length (VL2) in relation to the outer sensor arrangement in the direction of the exciter arrangement along the measuring tube center line,
wherein the inner sensor arrangement experiences a torsion amplitude of the measuring tube, which deviates by less than 20 % and particularly by less than 10 % from the torsion amplitude of the measuring tube in the case of the outer sensor arrangement.

2. Coriolis sensor as claimed in Claim 1,
wherein the sensor has an even number of measuring tubes, wherein two measuring tubes each form a measuring tube pair, wherein the measuring tubes of a measuring tube pair are designed to vibrate in the opposite direction, wherein the measuring tubes of a measuring tube pair are designed in a mirror-image manner in relation to a mirror plane arranged between the corresponding measuring tube longitudinal planes.

3. Coriolis sensor as claimed in Claim 2,
wherein the fixation device (15) is designed to couple the measuring tubes of at least a measuring tube pair with one another,
wherein the fixation device has a first clamping device (15.1) designed to specify the vibration node in the area of the inlet or of the outlet, and wherein, on a side of the first clamping device facing away from the exciter arrangement, the fixation device has at least a second clamping device to suppress a measuring tube vibration on the side of the first clamping device facing away from the exciter arrangement.

4. Coriolis sensor as claimed in Claim 3,
wherein the first clamping device and/or the second clamping device is plate-shaped and at least partially surrounds the measuring tubes of a measuring tube pair in each case.

5. Coriolis sensor as claimed in one of the previous claims,
wherein the sensor is set up for high-pressure applications,
wherein a ratio of the outer diameter of the measuring tube to the wall thickness is at maximum 20 and particularly at maximum 17 and preferably at maximum 15, and/or wherein a minimum pressure is 40 bar and particularly 70 bar and preferably 100 bar.

6. Coriolis sensor as claimed in one of the previous claims,
wherein the sensor has two collectors (17), wherein a first collector (17.1) located on a side upstream from the sensor is designed to receive a medium flowing into the sensor from a pipe and to conduct it to the inlet of the at least one measuring tube,
wherein a second collector (17.2) is designed to receive the medium leaving the outlet of the at least one measuring tube and to conduct it into the pipe.

7. Coriolis sensor as claimed in one of the previous claims,
wherein the sensor has two process connections (18), particularly flanges (18.1), which are designed to connect the sensor to a pipe.

8. Coriolis sensor as claimed in one of the previous claims,
wherein the sensor has a support tube (16) with a support tube chamber (16.1), wherein said support tube chamber is designed to at least partially house the at least one measuring tube.

9. Coriolis sensor as claimed in one of the previous claims,
wherein the exciter arrangement comprises at least one movable exciter element and at least one fixed exciter element, wherein the movable exciter element is arranged on a measuring tube, and/or
wherein the sensor arrangement comprises at least one movable sensor element and at least a fixed sensor element, wherein the movable sensor element is arranged on a measuring tube and is designed to follow the movements of the measuring tube, wherein the fixed exciter element or the fixed sensor element is particularly a coil device, and wherein the movable exciter element or the movable sensor element is particularly a permanent magnet.

10. Coriolis measuring device (1) comprising:
a Coriolis sensor (10) as claimed in Claim 1;
an electronic measuring/operating circuit (77), wherein the electronic measuring/operating circuit is designed to operate the exciter arrangement (12.2) and the sensor arrangements (13. 2),
wherein the electronic measuring/operating circuit is further designed to determine and make available flow measured values and/or density measured values on the basis of vibratory properties of the measuring tube measured using the sensor arrangements,
wherein the electronic measuring/operating circuit is connected to the sensor arrangements and to the exciter arrangement by means of electrical connections (19),
wherein the measuring device particularly has an electronics housing (80) to accommodate the electronic measuring/operating circuit.

## Revendications

1. Capteur Coriolis (10) d'un débitmètre Coriolis (1) destiné à la mesure d'un débit massique ou d'une densité d'un produit s'écoulant à travers au moins un tube de mesure (11) du débitmètre Coriolis, comprenant :
l'au moins un tube de mesure avec une entrée (11.1) et une sortie (11.2), lequel tube de mesure est conçu pour guider le produit entre l'entrée et la sortie ;
au moins un dispositif d'excitation (12.1), lequel est conçu pour faire vibrer l'au moins un tube de mesure dans un mode f1 en tant que mode fondamental de vibration ;
au moins deux groupes de capteurs d'arrangements de capteurs avec chacun au moins un arrangement de capteurs, les arrangements de capteurs étant chacun conçus pour mesurer la déviation des vibrations de l'au moins un tube de mesure;
l'au moins un tube de mesure étant conçu au moins par sections en forme d'arc et définissant respectivement un plan longitudinal de tube de mesure (MLE) ainsi qu'un chemin de tube de mesure le long d'une ligne médiane de tube de mesure (MML),
le dispositif d'excitation étant conçu pour exciter le tube de mesure en vibrations perpendiculaires au plan longitudinal respectif du tube de mesure,
le tube de mesure étant serré dans la zone de l'entrée et de la sortie par un dispositif de fixation de telle sorte que les vibrations du tube de mesure présentent respectivement un nœud de vibration extérieur (ASK) dans la zone de l'entrée et de la sortie, lesquels nœuds de vibration extérieurs définissent respectivement un point nodal (KP) sur la ligne médiane du tube de mesure,
les points nodaux définissant un axe longitudinal (LA),
le tube de mesure présentant une face intérieure (IS) tournée vers l'axe longitudinal ainsi qu'une face extérieure (AS) opposée à l'axe longitudinal,
le dispositif d'excitation étant disposé dans une zone centrale du tube de mesure par rapport à l'entrée et à la sortie, un premier groupe de capteurs étant disposé dans une zone intermédiaire du tube de mesure du côté de l'entrée et un deuxième groupe de capteurs étant disposé dans une zone intermédiaire du tube de mesure du côté de la sortie,
au moins un groupe de capteurs (13) étant un groupe de capteurs étendu (13.1) et comprenant au moins deux arrangements de capteurs (13.2),
chaque arrangement de capteurs du groupe de capteurs étendu étant disposé sur un côté extérieur ou sur un côté intérieur du tube de mesure,
un arrangement de capteurs sur le côté extérieur étant un arrangement de capteurs extérieur (13.21) et
un arrangement de capteurs sur le côté intérieur étant un arrangement de capteurs intérieur (13.22),
**caractérisé en ce qu'**un premier arrangement de capteurs est disposé sur le côté extérieur et un deuxième arrangement de capteurs est disposé sur le côté intérieur,
l'arrangement de capteurs intérieur étant décalé d'une deuxième longueur de décalage (VL2) par rapport à l'arrangement de capteurs extérieur en direction du dispositif d'excitation le long de la ligne médiane du tube de mesure,
l'arrangement de capteurs intérieur subissant une amplitude de torsion du tube de mesure, laquelle amplitude s'écarte de moins de 20 % et notamment de moins de 10 % de l'amplitude de torsion du tube de mesure pour l'arrangement de capteurs extérieur.

2. Capteur Coriolis selon la revendication 1,
pour lequel le capteur présente un nombre pair de tubes de mesure, deux tubes de mesure formant à chaque fois une paire de tubes de mesure, les tubes de mesure d'une paire de tubes de mesure étant conçus pour vibrer en sens inverse, les tubes de mesure d'une paire de tubes de mesure étant conçus de manière inversée par rapport à un plan de réflexion disposé entre les plans longitudinaux correspondants des tubes de mesure.

3. Capteur Coriolis selon la revendication 2,
pour lequel le dispositif de fixation (15) est conçu pour coupler entre eux les tubes de mesure d'au moins une paire de tubes de mesure,
le dispositif de fixation présentant un premier dispositif de serrage (15.1) destiné à fixer le nœud de vibration dans la zone de l'entrée ou de la sortie, et le dispositif de fixation présentant, sur un côté du premier dispositif de serrage opposé au dispositif d'excitation, au moins un deuxième dispositif de serrage pour supprimer une vibration du tube de mesure sur le côté du premier dispositif de serrage opposé au dispositif d'excitation.

4. Capteur Coriolis selon la revendication 3,
pour lequel le premier dispositif de serrage et/ou le deuxième dispositif de serrage est en forme de plaque et entoure respectivement au moins partiellement les tubes de mesure d'une paire de tubes de mesure.

5. Capteur Coriolis selon l'une des revendications précédentes,
pour lequel le capteur est adapté aux applications à haute pression,
un rapport entre le diamètre extérieur du tube de mesure et l'épaisseur de paroi étant au maximum de 20 et notamment au maximum de 17 et de préférence au maximum de 15, et/ou une pression minimale étant de 40 bar et notamment de 70 bar et de préférence de 100 bar.

6. Capteur Coriolis selon l'une des revendications précédentes,
pour lequel le capteur comporte deux collecteurs (17), un premier collecteur (17.1) situé sur un côté amont du capteur étant conçu pour recevoir un produit s'écoulant dans le capteur à partir d'une conduite et pour le guider vers l'entrée de l'au moins un tube de mesure,
un deuxième collecteur (17.2) étant conçu pour recevoir le produit venant de la sortie de l'au moins un tube de mesure et pour le guider dans la conduite.

7. Capteur Coriolis selon l'une des revendications précédentes,
pour lequel le capteur comporte deux raccords process (18), notamment des brides (18.1), lesquels raccords sont conçus pour relier le capteur à une conduite.

8. Capteur Coriolis selon l'une des revendications précédentes,
pour lequel le capteur présente un tube de support (16) avec une chambre de tube de support (16.1), laquelle chambre de tube de support est conçue pour loger au moins partiellement l'au moins un tube de mesure.

9. Capteur Coriolis selon l'une des revendications précédentes,
pour lequel le dispositif d'excitation comprend au moins un élément d'excitation mobile et au moins un élément d'excitation fixe, l'élément d'excitation mobile étant disposé sur un tube de mesure, et/ou
pour lequel l'arrangement de capteurs comprend au moins un élément capteur mobile et au moins un élément capteur fixe, l'élément capteur mobile étant disposé sur un tube de mesure et étant conçu pour suivre les mouvements du tube de mesure, l'élément d'excitation fixe ou l'élément capteur fixe étant un dispositif à bobine, et l'élément d'excitation module ou l'élément capteur mobile étant notamment un aimant permanent.

10. Débitmètre Coriolis (1) comprenant :
un capteur Coriolis (10) selon la revendication 1 ;
un circuit électronique de mesure/d'exploitation (77), le circuit électronique de mesure/d'exploitation étant conçu pour exploiter le dispositif d'excitation (12.2) ainsi que les arrangements de capteurs (13. 2),
le circuit électronique de mesure/d'exploitation étant en outre conçu pour déterminer et mettre à disposition des valeurs mesurées de débit et/ou des valeurs mesurées de densité sur la base de propriétés vibratoires du tube de mesure mesurées au moyen des arrangements de capteurs,
le circuit électronique de mesure/d'exploitation étant relié aux arrangements de capteurs ainsi qu'au dispositif d'excitation au moyen de liaisons électriques (19),
l'appareil de mesure présentant notamment un boîtier électronique (80) pour loger le circuit électronique de mesure/d'exploitation.
